Europäisches Patentamt

European Patent Office

Office européen des brevets

(11) Veröffentlichungsnummer: **0 214 701 B1**

(12) **EUROPÄISCHE PATENTSCHRIFT**

(45) Veröffentlichungstag der Patentschrift: **04.03.92**

(21) Anmeldenummer: **86201546.8**

(22) Anmeldetag: **09.09.86**

(51) Int. Cl.⁵: **G02B 6/44**, G02B 6/24

(54) **Aufnahmeeinrichtung für eine Vorratslänge einer optischen Leitung.**

(30) Priorität: **11.09.85 DE 3532314**

(43) Veröffentlichungstag der Anmeldung:
**18.03.87 Patentblatt 87/12**

(45) Bekanntmachung des Hinweises auf die Patenterteilung:
**04.03.92 Patentblatt 92/10**

(84) Benannte Vertragsstaaten:
**DE FR GB**

(56) Entgegenhaltungen:
**EP-A- 0 106 192**
**DE-A- 2 721 300**
**JP-A-57 148 704**
**US-A- 3 773 987**

**PATENT ABSTRACTS OF JAPAN, Band 6, Nr. 252 (P-161)[1130], 10. Dezember 1982 & JP-A-57-148 704**

(73) Patentinhaber: **Philips Patentverwaltung GmbH**
**Wendenstrasse 35 Postfach 10 51 49**
**W-2000 Hamburg 1(DE)**

(84) Benannte Vertragsstaaten:
**DE**

(73) Patentinhaber: **N.V. Philips' Gloeilampenfabrieken**
**Groenewoudseweg 1**
**NL-5621 BA Eindhoven(NL)**

(84) Benannte Vertragsstaaten:
**FR GB**

(72) Erfinder: **Becker, Johann**
**Zöllnerstrasse 64**
**W-5063 Overath(DE)**
Erfinder: **Deusser, Peter**
**Hazebrouckstrasse 12**
**W-5000 Köln 90(DE)**
Erfinder: **Zell, Werner, Dr.**
**Gleitwitzerstrasse 15**
**W-5000 Köln 80(DE)**

(74) Vertreter: **Koch, Ingo, Dr.-Ing. et al**
**Philips Patentverwaltung GmbH Wendenstrasse 35 Postfach 10 51 49**
**W-2000 Hamburg 1(DE)**

## Beschreibung

Die Erfindung bezieht sich auf eine Aufnahmeeinrichtung mit einem flachen Speicherraum und mit einer nach Bedarf herausziehbaren oder hineinschiebbaren Vorratslänge einer optischen Leitung, wobei der Speicherraum durch einem Kern, durch mit diesem fest verbundene und sich von diesem orthogonal erstreckende seitliche Führungswandungen sowie durch mit den Führungswandungen fest verbundene äußere Umfangswandungen gebildet ist, und wobei ein äußeres Ende der um den Kern gewundenen Vorratslänge unter Verkleinerung der Windungsdurchmesser durch eine Öffnung der äußeren Umfangswandung herausziehbar ist.

Eine derartige Anordnung ist durch die DE-A-32 48 003 und auch durch die DE-A-27 21 300 bekannt. Dabei werden Lichtwellenleiter in mehrere Windungen aufweisende Schlaufen gelegt. Beim Herausziehen eines Endes besteht die Gefahr der Verklemmung der Windungen untereinander, so daß ein Wiederhineinschieben nicht mehr möglich ist. Die Ablage von Bandleitungen, welche aus mehreren fest aneinander verbundenen Lichtwellenleitern bestehen, würde darüberhinaus entsprechend der Anzahl der nebeneinander zu verlegenden Windungen hohe Ablagebehälter bedingen.

Der Erfindung liegt die Aufgabe zugrunde, die Aufnahmeeinrichtung der eingangs genannten Art so zu gestalten, daß bei äußerst flachem Aufbau ein klemmfreies Herausziehen und Wiederhineinschieben eines Endes einer optischen Leitung, welche gegebenenfalls eine Bandleitung sein kann, möglich ist.

Die Lösung gelingt dadurch, daß der Abstand zwischen den Führungswandungen größer als die Breite der optischen Leitung und kleiner als das 1,3- fache dieser Breite ist, daß die optische Leitung mit spiralförmig in einer Ebene verlaufenden Windungen in den Speicherraum eingelegt ist, und daß in unmittelbarer Nähe der Umfangsfläche des Kerns eine aus dem Speicherraum führende Öffnung vorgesehen ist, durch welche das innere Ende einer spiralig geführten Vorratslänge der optischen Leitung aus dem Speicherraum herausgeführt ist.

Durch die spiralförmige Verlegung der Windungen radial übereinander in einer Ebene ergeben sich extrem flache Behälter. Dabei werden die Windungen definiert geordnet geführt. Das Herausziehen oder Wiederhineinschieben eines Endes ist leichtgängig möglich und eine Verklemmung ist ausgeschlossen, wenn das herausziehbare Ende von der radial außen liegenden Windung gebildet ist. Deshalb kann eine Vielzahl von Windungen problemlos eingewickelt sein. Selbst bei kleiner radialer Abmessungen der erfindungsgemäßen Aufnahmeeinrichtung sind darin große Vorratslängen unterbringbar.

Damit auch bei vollständigem festen Ausziehen eines Endes der optischen Leitung der zulässige Mindestbiegeradius nicht unterschritten wird, ist der Durchmesser des Kerns vorteilhaft größer als 40 mm, insbesondere größer als 50 mm zu wählen.

Eine optimale Ausnutzung des Speicherraums ergibt sich, wenn die Anzahl n der Windungen

$$n = k \cdot \frac{D - d}{do}$$

beträgt mit

d = Durchmesser des Kerns,
D = maximaler Durchmesser der äußersten Windung
do = Breite der optischen Leitung
0,2 < k < 0,3, insbesondere k = 0,25.

Die beim Herausziehen oder Hineinschieben eines Endes der optischen Leitung bewirkte Durchmesseränderung der Windungen wird durch das von außen nach innen zu führende, fest verlegte Ende der optischen Leitung nicht behindert, wenn das fest verlegte Ende der optischen Leitung von einer Ebene außerhalb der Windungsebene und radial außen beginnend schräg bis zumindest annähernd zur Umfangsfläche des Kerns hin in einem Führungskanal verläuft.

Ein solcher Führungskanal ist vorteilhaft zumindest teilweise zu einer der Flachseiten der Aufnahmeeinrichtung hin geöffnet, damit er einfach herstellbar und das Ende der optischen Leitung leicht einlegbar ist.

Eine bevorzugte Ausführungsform zum Einlegen einer Bandleitung ist dadurch gekennzeichnet, daß der Kanal rechteckig entsprechend den Querschnittsabmessungen einer Bandleitung gestaltet ist und in der Weise geschränkt verläuft, daß sich seine breitere Seite radial außen parallel zur Richtung der Windungsebene und radial innen parallel zur Mantelfläche des Kerns und dieser benachbart erstreckt. Dadurch wird erreicht, daß für das fest verlegte Ende praktisch keine Erhöhung der Aufnahmeeinrichtung erforderlich ist, weil dieses flach im ohnehin für die Führungswandung erforderlichen Raum verläuft. Darüberhinaus sind scharfe Krümmungen vermieden. Eine folgende Windung liegt nicht bereits im Schränkungsbereich des festverlegten Endes an diesem an, sondern erst dann, wenn es in parelleler Führung zur Mantelfläche des Kerns verläuft.

Zur Bildung eines Stapels können mehrere gleichartige erfindungsgemäße Aufnahmeeinrichtungen koaxial übereinander angeordnet werden und dabei mittels formschlüssig, gegebenenfalls rastend ineinandergreifender Elemente verbunden sein.

Es ist nicht erforderlich, daß die seitlichen Führungswandungen als geschlossene Flanschflächen ausgebildet sind. Eine bevorzugte Ausführungsart ist dadurch gekennzeichnet, daß die Führungswandungen zumindest einseitig aus mindestens 3 sich radial erstreckenden Führungsspeichen bestehen, welche im mittleren Bereich durch Einführungsschlitze getrennt sind. Die Windungen der optischen Leitungen können durch die Schlitze eingebracht werden. Wenn diese schräg zur Tangente der Windungen der optischen Leitung verlaufen, ist ein späteres zufälliges Herausgleiten verhindert.

Eine weitere vorteilhafte Ausführungsform ist dadurch gekennzeichnet, daß sie einen zentralen Aufwickelteil aufweist, welcher lösbar in einen Außenteil einfügbar ist, welcher die äußeren Umfangswandungen und radial äußeren Teilabschnitte der seitlichen Führungswandungen bildet.

Die Erfindung wird anhand der Beschreibung von in der Zeichnung dargestellten Ausführungsbeispielen näher erläutert.

Figur 1    zeigt eine zweiteilige Aufnahmeeinrichtung gemäß der Erfindung zur Ablage mehrerer Windungen einer bandförmigen optischen Leitung

Figur 2    zeigt einen Querschnitt entsprechend der Linie A-B durch die Ausführung nach Figur 1

Figur 3    zeigt eine einstöckige Ausführungart ähnlich Figur 1, jedoch mit einem Einführungskanal für das fest verlegte Ende der optischen Leitung

Figur 4    zeigt einen Querschnitt entsprechend der Linie C-D nach Figur 3

Figur 5    zeigt ein typisches Anwendungsbeispiel für erfindungsgemäße Aufnahmeeinrichtungen

Figur 6    zeigt einen Querschnitt durch die Anordnung nach Figur 5

Figur 7    zeigt einen Querschnitt durch zwei übereinander gestapelte Aufnahmeeinrichtungen

Figur 8    zeigt ein weiteres Anwendungsbeispiel für den Einsatz einer erfindungsgemäßen Aufnahmeeinrichtung.

In den Ausführungsbeispielen sind erfindungsgemäße Aufnahmeeinrichtungen jeweils für die Aufnahme flacher bandförmiger optischer Leitungen 1 bis 5 dargestellt. Derartige Bandleitungen bestehen aus mehreren flach nebeneinander verbundenen einzelnen Lichtwellenleitern. Die freie Höhe zwischen den seitlichen Führungswandungen, nämlich den geschlossenen Rückwandungen 6 bis 10 einerseits und den aus radialen Speichen 11 bis 16 bestehenden Vorderwandungen andererseits, ist dann geringfügig größer die in der Flachebene gemessene Breite der Bandleitungen zu wählen.

Sie sollte das 1,3 fache dieser Breite nicht überschreiten, damit eine gut gleitfähige und geordnete Spiralführung gewährleitet ist.

Wenn die erfindungsgemäße Aufnahmeeinrichtung jedoch zur Ablage von Rundadern oder einzelnen Lichtwellenleitern dienen soll, beträgt die freie Höhe geringfügig mehr als der Durchmesser der Adern bzw. Leitungen.

Der Durchmesser der Kerne 17 bis 21 beträgt 50 mm. Die minimalen Biegeradien der innersten Windung sind im Falle der direkten Anlage am Kern mit Sicherheit größer als der für Lichtwellenleiter minimal zulässige Wert.

Der Durchmesser D der äußeren Führungswandungen 22 bis 26 beträgt vorzugsweise das 1,8 bis 2,2 fache des Kerndurchmessers d. Bei diesem Verhältnis ergibt sich eine gute Aufnahmefähigkeit bei relativ geringen Außenabmessungen. Die äußeren Führungswandungen brauchen nicht unbedingt zylindrisch zu verlaufen, sondern sie können auch aus winklig aneinanderstoßenden ebenen Elementen bestehen, an welchen die äußerste Windung punktweise anliegt.

Bei gegebenen Werten für D und d sowie für den Durchmesser d o einer Rundader oder eines Lichtwellenleiters bzw. der Dicke einer Bandleitung (kleinere Querschnittsseite) ergibt sich eine maximal ausziehfähige Länge, wenn die Anzahl n der Windungen etwa

$$n = k \cdot \frac{D - d}{do}$$

mit k = 0,25 gewählt wird. Werte von 0,2 < k < 0,3 führen jedoch auch zu praktisch brauchbaren Ergebnissen.

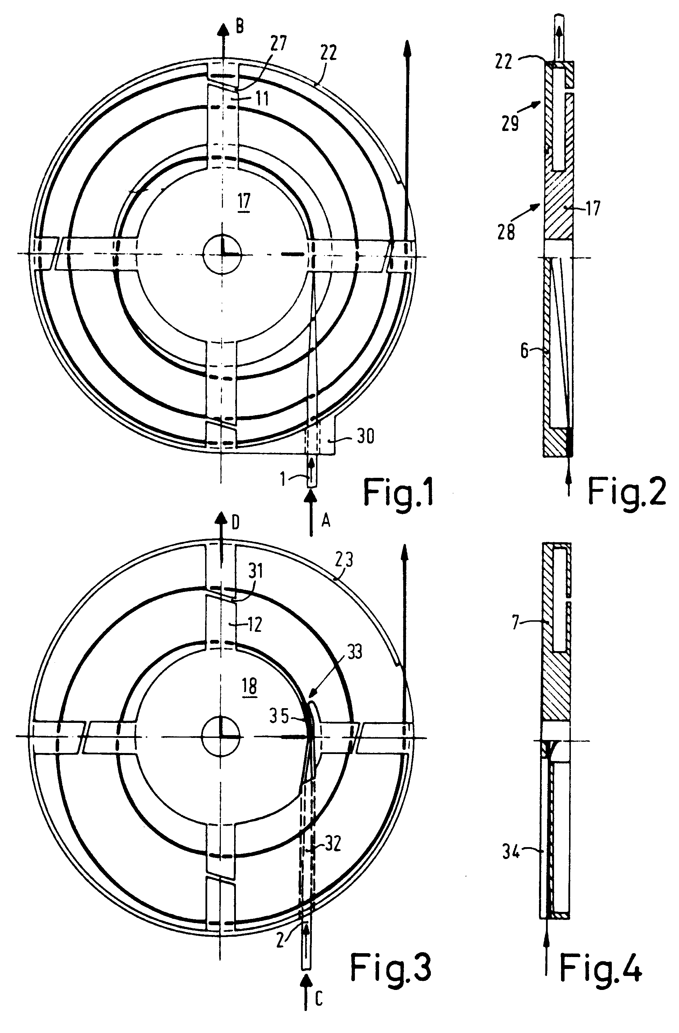

Bei der in den Figuren 1 und 2 dagestellten Ausführungform sind der besseren Darstellbarkeit wegen nur 3 Windungen der optischen Bandleitung 1 gezeichnet, welche durch die Einführungsschlitze 27 eingefädelt werden können, welche ebenso wie in den weiteren Figuren schräg zur Tangentialrichtung der Windungen verlaufen, damit ein unbeabsichtigtes Wiederhinausgleiten der eingelegten Windungen verhindert ist. Wenn jedoch wie im Ausführungsbeispiel die Aufnahmeeinrichtung aus lösbar ineinandergefügten Teilen, dem Aufwickelteil 28 und dem Außenteil 29 besteht, können die Windungen auch vor dem Zusammenfügen beider Teile in einfacher Weise um den Kern 17 des Aufwickelteils 28 gewickelt werden. Der zur inneren Windung führende festliegende Teil der Bandleitung 1 ist zwischen der Anlage am Umfang des Kerns 17 und der radial außen liegenden Halterung 30 frei geführt. In diesem Bereich tordiert die Querschnittsebene der Bandleitung 1 um 90° von einer flach zur Ebene der Führungswandungen gerichteten Lage in eine zur Umfangsfläche 17 parallele Lage. Dabei kann nicht ganz ausgeschlossen werden, daß der frei über die Windungen geführte Abschnitt der Bandleitung 1 an den darunterliegenden Windungen anliegt und deren Gleiten behindert. Wenn wie in den Ausführungsbeispielen radiale Speichen 11 als Führungswandungen dienen, zwischen welchen große Bereiche offen bleiben, so daß die Windungen zugänglich sind, können eventuelle Verklemmungen leicht gelöst werden.

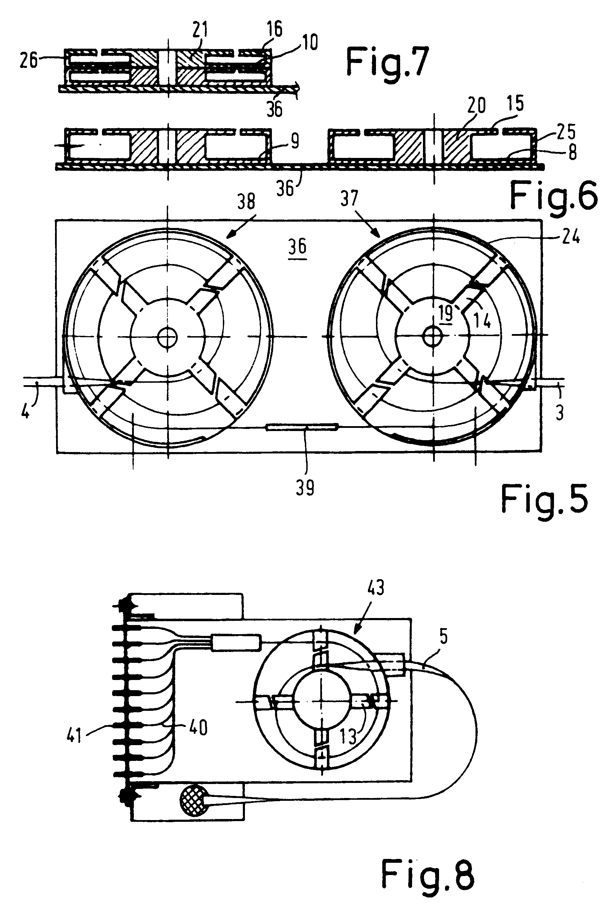

Insbesondere, wenn mehrere der erfindungsgemäßen Aufnahmeeinrichtungen gemäß Figur 7 aufeinander gestapelt werden sollen, empfiehlt sich eine Ausführungsart nach den Figuren 3 und 4. Diese ist einstückig gezeichnet, kann jedoch selbstverständlich aus mehreren Einzelteilen zusammengesetzt sein. Die Bandleitung 2 ist durch die schräg verlaufenden Schlitze 31 der speichenartigen Führungswandungen 12 eingebracht. Im Gegensatz zur prinzipiell ähnlichen Ausführungsform nach den Figuren 1 und 2 ist das festliegende Ende 32 der Bandleitung 2 in einem Einführungskanal bis zur Austrittsstelle 33 geführt. Es verläuft zunächst flach durch eine nach unten offene Rinne 34 der Führungswandung 7 und tritt in der Nähe der Umfangsfläche des Kerns 18 in den Aufnahmeraum zwischen den Führungswandungen 7 und 12 ein. Es verläuft danach, sich stetig bis zum Winkel von 90° an der Stelle 33 drehend, durch eine zur Seite der Wandungen 12 hin offenen Rinne 35 im Kern 18. Deshalb kann das Ende 32 die Spiralwindungen nicht behindern, da es durch Wandungen des aus den Rinnen 34 und 35 bestehenden Einführungskanals gegen eine Berührung mit den folgenden Windungen abgeschirmt ist. Bei der Formgebung der Rinne 35 ist darauf zu achten, daß an keiner Stelle der minimal zulässigen Biegeradius der Lichtwellenleiter unterschritten wird. Der Schränkungsverlauf ist in vorbestimmter Weise festgelegt.

Ein typisches Anwendungsgebiet für erfindungsgemäße Aufnahmeeinrichtungen ist eine Verbindungsmuffe nach Figur 5, von welcher nur eine Gehäuseplatte 36 bezeichnet ist. Die Reservelänge der ersten Bandleitung 3 ist in der Aufnahmeeinrichtung 37, die der Bandleitung 4 in der gleichartigen Aufnahmeeinrichtung 38 untergebracht. Zum bequemen Herstellen der Spleiße 39 können zunächst die gespeicherten Reservelängen herausgezogen und nach der Fertigstellung der Spleiße wieder in die Aufnahmevorrichtung zurückgeschoben werden.

In Figur 7 sind für den Fall, daß statt einer Bandleitung 4 weniger Lichtwellenleiter enthaltende und dementsprechend schmälere Bandleitungen zugeführt werden, zwei übereinandergestapelte Aufnahmeeinrichtungen mit jeweils den schmäleren Breiten der einzelnen Bandleitungen angepaßten Aufnahmeräumen dargestellt.

Figur 8 zeigt einen Endabschluß für eine Bandleitung 5. Die zur Herstellung der Anschlüsse der einzelnen Lichtwellenleiter 40 mit Steckelementen 41 erforderlichen Reservelängen sind in der Aufnahmeeinrichtung 43 gespeichert.

**Patentansprüche**

1. Aufnahmeeinrichtung mit einem flachen Speicherraum und mit einer nach Bedarf herausziehbaren oder hineinschiebbaren Vorratslänge einer optischen Leitung (1 bis 5), wobei der Speicherraum durch einem Kern (17 bis 21), durch mit diesem fest verbundene und sich von diesem orthogonal erstreckende seitliche Führungswandungen (6 bis 10 bzw. 11 bis 16) sowie durch eine fest mit den Führungswandungen verbundene äußere Umfangswandung (22 bis 26) gebildet ist, und wobei ein äußeres Ende der um den Kern gewundenen Vorratslänge (1 bis 5) unter Verkleinerung der Windungsdurchmesser durch eine Öffnung der äußeren Umfangswandung (22 bis 26) herausziehbar ist, dadurch gekennzeichnet, daß der Abstand zwischen den Führungswandungen (6 bis 10 bzw. 11 bis 16) größer als die Breite der optischen Leitung (1 bis 5) und kleiner als das 1,3-fache dieser Breite ist, daß die optische Leitung (1 bis 5) mit spiralförmig in einer Ebene verlaufenden Windungen in den Speicherraum eingelegt ist, und daß in unmittelbarer Nähe der Umfangsfläche des Kerns (17 bis 21) eine aus dem Speicherraum führende Öffnung (33) vorgesehen ist, durch welche das innere Ende (32) einer spiralig geführten Vorratslänge der optischen Leitung aus dem Speicherraum herausgeführt ist.

2. Aufnahmeeinrichtung nach Anspruch 1, dadurch gekennzeichnet, daß Mittel (34,35) zur Verlegung des inneren Endes (32) der optischen Leitung (2) vorgesehen sind, welche einen außerhalb des Speicherraums verlaufenden Einführungskanal bilden.

3. Aufnahmeeinrichtung nach Anspruch 1 oder 2, dadurch gekennzeichnet, daß der Durchmesser d des Kerns (17 bis 21) größer als 40 mm ist.

4. Aufnahmeeinrichtung nach einem der Ansprüche 1 bis 3, dadurch gekennzeichnet, daß die Anzahl n Windungen

$$n = k \frac{D - d}{do}$$

beträgt, mit

 d =  Durchmesser des Kerns

 D =  maximaler Durchmesser der äußersten Windung

 $d_o$ =  Breite der optischen Leitung

   $0,2 < k < 0,3$, insbesondere $k = 0,25$.

5. Aufnahmeeinrichtung nach einem der Ansprüche 1 bis 4,
dadurch gekennzeichnet, daß die optische Leitung (1 bis 5) eine Rundader oder ein Lichtwellenleiter ist.

6. Aufnahmeeinrichtung nach einem der Ansprüche 1 bis 5,
dadurch gekennzeichnet, daß die optische Leitung eine Bandleitung (1 bis 5) mit festverbunden nebeneinander angeordneten Lichtwellenleitern oder Rundadern besteht.

7. Aufnahmeeinrichtung nach einem der Ansprüche 1 bis 6,
dadurch gekennzeichnet, daß ein Führungskanal (Rinne 34,35) für das festverlegte innere Ende (32) der optischen Leitung vorgesehen ist, welcher von einer Ebene außerhalb der Windungsebene und radial außen beginnend schräg bis zumindest annähernd zur Umfangsfläche des Kerns hin verläuft.

8. Aufnahmeeinrichtung nach Anspruch 7,
dadurch gekennzeichnet, daß der Führungskanal (Rinnen 34, 35) zumindest teilweise zu einer der Flachseiten der Aufnahmeeinrichtung hin geöffnet ist.

9. Aufnahmeeinrichtung nach Anspruch 7 oder 8,
dadurch gekennzeichnet, daß der Kanal rechteckig entsprechend den Querschnittsabmessungen einer Bandleitung (2) gestaltet ist und in der Weise geschränkt verläuft, daß sich seine breitere Seite radial außen parallel zur Richtung der Windungsebene und radial innen (Stelle 33) parallel zur Mantelfläche des Kerns (18) und dieser benachbart erstreckt.

10. Aufnahmeeinrichtung nach einem der Ansprüche 1 bis 9,
dadurch gekennzeichnet, daß die Leiter des herausziehbaren Endes der optischen Leitung (5) mit Steckerelementen (41) verbunden sind.

11. Aufnahmeeinrichtung nach einem der Ansprüche 1 bis 10,
dadurch gekennzeichnet, daß die Führungswandungen zumindest einseitig aus mindestens drei sich radial erstreckenden Führungsspeichen (11 bis 16) bestehen, welche im mittleren Bereich durch Einführungsschlitze (27,31) getrennt sind.

12. Aufnahmeeinrichtung nach Anspruch 11,
dadurch gekennzeichnet, daß die Einführungsschlitze (27,31) schräg zur Tangente der Windungen der optischen Leitung (1 bis 5) verlaufen.

13. Stapel von gleichartigen Aufnahmeeinrichtungen mit im Speicherraum angeordneten optischen Leitungen,
dadurch gekennzeichnet, daß die Aufnahmeeinrichtungen nach einem der Ansprüche 1 bis 12 ausgebildet sind.

14. Stapel von gleichartigen Aufnahmeeinrichtungen nach Anspruch 13,
dadurch gekennzeichnet, daß die Aufnahmeeinrichtungen mittels formschlüssig und gegebenenfalls rastend ineinandergreifener Elemente miteinander verbunden sind.

15. Endabschlußgehäuse für eine optische Bandleitung (5), welche optische Steckerelemente (41) aufweist, mit denen die einzelnen Lichtwellenleiter (40) der Bandleitung (5) verbunden sind,
dadurch gekennzeichnet, daß mit dem Endabschlußgehäuse (Fig. 8) eine Aufnahmeeinrichtung nach einem der Ansprüche 1 bis 12 verbunden ist, in deren Speicherraum eine Vorratslänge der optischen Bandleitung (5) eingelegt ist.

**Claims**

1. A storage device comprising a flat storage space and a spare length of optical cable (1 to 5) which can be pulled out or pushed in depending on the requirements, which storage space is composed of a core (17 to 21) and lateral guide walls (6 to 10 and 11 to 16) which are fixedly connected to the core and extend at right angles to said core, and of an outer peripheral wall (22 to 26) which is fixedly connected to the guide walls, in which device an outer end of the spare length (1 to 5) wound around the core can be pulled out through an aperture in the outer peripheral wall (22 to 26) thereby reducing the diameter of the turns, characterized in that the distance between the guide walls (6 to 10 and 11 to 16) is greater than the width of the optical cable (1 to 5) and smaller than 1.3 times that width, the turns of the optical cable (1 to 5) accomodated in the storage space extend spirally in one plane, and an aperture (33) leading out of the storage space located in the immediate vicinity of the circumferential surface of the core (17 to 21), the inner end (32) of a spirally arranged spare length of the optical cable being led out of the storage spare through said aperture.

2. A storage device as claimed in Claim 1, characterized in that means (34, 35) of arranging the inner end (32) of the optical cable (2) are provided which form a lead-in channel extending outside the storage space.

3. A storage device as claimed in Claim 1 or 2, characterized in that the diameter d of the core (17 to 21) is greater than 40 mm.

4. A storage device as claimed in one of the Claims 1 to 3, characterized in that the number n of turns is

$$n = k \ \frac{D-d}{d_o},$$

where

   d =    the diameter of the core
   D =    the maxinyn diameter of the outermost turn
   $d_o$ =    the width of the optical cable and 0.2 < k < 0.3, in particular k = 0.25.

5. A storage device as claimed in one of Claims 1 to 4, characterized in that the optical cable (1 to 5) is a round wire or an optical waveguide.

6. A device as claimed in any one of Claims 1 to 5, characterized in that the optical cable is a ribbon cable (1 to 5) comprising juxtaposed, fixedly interconnected optical waveguides or round wires.

7. A storage device as claimed in one of Claims 1 to 6, characterized in that the fixed inner end (32) of the optical cable is accomodated in a guide channel (groove 34, 35) starting radially outside and extending obliquely from a plane outside the plane of the turns to at least approximately the circumferential surface of the core.

8. A storage device as claimed in Claim 7, characterized in that the guide channel (groove 34, 35) is open at least partly to one of the flat sides of the storage device.

9. A storage device as claimed in Claims 7 to 8, characterized in that the guide channel is shaped rectangularly in accordance with the cross-sectional dimensions of a ribbon cable (2) and is twisted in such a way that, radially outside, the direction of its width extends parallel to the plane of the turns and, radially inside (point 33), parallel and adjacent to the cladding surface of the core (18).

10. A storage device as claimed in one of Claims 1 to 9, characterized in that the conductors of the end of the optical line (5) which can be pulled out are connected to connector elements (41).

11. A storage device as claimed in one of Claims 1 to 13, characterized in that the guide walls consist on at least one side of at least three radially extending guide spokes (11 to 16) which are interrupted in their central area by lead-in slots (27,31).

12. A storage device as claimed in Claim 11, characterized in that the lead-in slots (27, 31) run obliquely to the tangent of the turns of the optical cable (1 to 5).

13. A stack of similar storage devices comprising optical cable arranged in the storage space, characterized in that the storage devices are constructed as claimed in one of the Claims 1 to 12.

14. A stack of similar storage devices as claimed in Claim 13, characterized in that the storage devices are interconnected by matching or, if necessary, interlocking elements.

15. A terminal housing for an optical cable (5) having optical connected elements (41) to which the individual optical waveguides (40) of the optical cable (5) are connected, characterized in that a storage device as claimed in one of the Claims 1 to 12 is connected to the terminal housing (Fig. 8), said storage device comprising in its storage space a spare length of the optical cable (5).

**Revendications**

1. Dispositif de réception muni d'un espace de stockage plan et d'une longueur de réserve d'un conducteur (1 à 5) pouvant, suivant le besoin, en être extraite ou y être introduite, espace de stockage qui est formé par un noyau (17 à 21), par des parois latérales de guidage (6 à 10, respectivement 11 à 16) reliés rigidement à ce noyau et s'étendant orthogonalement à celui-ci, ainsi que par une paroi circonférentielle extérieure (22 à 26) reliée rigidement aux parois de guidage, une extrémité de la longueur de réserve (1 à 5) enroulée autour du noyau pouvant être extraite par une ouverture de la paroi circonférentielle extérieure (22 à 26), par réduction de diamètre de la spire, caractérisé en ce que la distance entre les parois de guidage (6 à 10, respectivement 11 à 16) est supérieure à la largeur du conducteur (1 à 5) et inférieure à 1,3 fois cette largeur, que le conducteur (1 à 5) est disposé dans l'espace de stockage sous la forme de spires s'étendant en spirale dans un seul plan et que, à proximité immédiate de la surface circonférentielle du noyau (17 à 21), est pratiquée une ouverture de sortie (33) de l'espace de stockage par laquelle l'extrémité intérieure (32) d'une longueur de réserve enroulée en spirale du conducteur est sortie de l'espace de stockage.

2. Dispositif de réception selon la revendication 1 caractérisé en ce que, pour la mise en place de l'extrémité intérieure (32) du conducteur (2), il est prévu des moyens (34,35) constituant un canal d'introduction s'étendant à l'extérieur de l'espace de stockage.

3. Dispositif de réception selon la revendication 1 ou 2, caractérisé en ce que le diamètre d de l'âme (17 à 21) est supérieur à 40 mm.

4. Dispositif de réception selon l'une quelconque des revendications 1 à 3, caractérisé en ce que le nombre n des spires est égal à

$$n = k \cdot \frac{D - d}{do} \qquad ,$$

où

d = le diamètre de l'âme
D = le diamètre maximal de l'extrême spire extérieure
do = la largeur du conducteur
0,2 < k < 0,3, avec k = 0,25.

5. Dispositif de réception selon l'une quelconque des revendications 1 à 4, caractérisé en ce que le conducteur (1 à 5) est un câble rond ou un guide de lumière.

6. Dispositif de réception selon l'une quelconque des revendications 1 à 5, caractérisé en ce que le conducteur est constituée par un câble à ruban (1 à 5) comportant des guides de lumière ou des câbles ronds disposés côte-à-côte et reliés entre eux.

7. Dispositif de réception selon l'une quelconque des revendications 1 à 6, caractérisé en ce que, pour la partie immobilisée intérieure (32) du conducteur, il est prévu un canal de guidage (rainures 34,35) qui, à partir d'un plan situé hors du plan d'enroulement, en partant d'un point situé radialement à l'extérieur, s'étend obliquement jusqu'à au moins approximativement la surface circonférentielle du noyau.

8. Dispositif de réception selon la revendication 7, caractérisé en ce que le canal de guidage (rainures 34,35) est au moins partiellement ouvert du côté de l'une des faces du dispositif de réception.

9. Dispositif de réception selon la revendication 7 ou 8, caractérisé en ce que le canal a une forme rectangulaire correspondant aux dimensions en section transversale d'un câble à ruban (2) et qu'il est tordu de telle manière que son côté large, mesuré radialement à l'extérieur, s'étend parallèlement au sens du plan d'enroulement et mesuré radialement à l'intérieur (position 33), s'étend parallèlement à la surface cylindrique du noyau (18) et à proximité de celle-ci.

10. Dispositif de réception selon l'une quelconque des revendications 1 à 9, caractérisé en ce que les guides de l'extrémité extractible du conducteur (5) sont reliés à des éléments connecteurs (41).

11. Dispositif de réception selon l'une quelconque des revendications 1 à 10, caractérisé en ce que, au moins d'un côté, les parois de guidage comportent au moins trois rayons de guidage (11 à 16) s'étendant radialement et qui, dans la zone centrale, sont séparés par des rainures d'introduction (27, 31).

12. Dispositif de réception selon la revendication 11, caractérisé en ce que les rainures d'introduction (27,31) s'étendent obliquement à la tangente aux spires du conducteur (1 à 5).

13. Empilement de dispositifs de réception analogues munis de conducteurs disposés dans l'espace de stockage, caractérisé en ce que les dispositifs de réception sont réalisés selon l'une quelconque des revendications 1 à 12.

14. Empilement de dispositifs de réception analogues selon la revendication 13, caractérisé en ce que les dispositifs de réception sont reliés par des éléments qui s'emboîtent, le cas échéant par des éléments encliquetables.

**15.** Boîtier terminal destiné à un câble optique à ruban (5) présentant des éléments connecteurs optiques (41) auxquels sont reliés les guides de lumière individuels (40) du câble optique (5) caractérisé en ce que, au boîtier terminal (figure 8), selon l'une quelconque des revendications 1 à 12, est relié un dispositif de réception dans l'espace de stockage duquel on a disposé une longueur de réserve du câble optique à ruban (5).

Fig.1

Fig.2

Fig.3

Fig.4

Fig.7

Fig.6

Fig.5

Fig.8